(19) Europäisches Patentamt
European Patent Office
Office européen des brevets

(11) **EP 3 993 396 B1**

(12) **EUROPEAN PATENT SPECIFICATION**

(45) Date of publication and mention
of the grant of the patent:
**15.10.2025 Bulletin 2025/42**

(21) Application number: **20898101.9**

(22) Date of filing: **10.06.2020**

(51) International Patent Classification (IPC):
*G06T 5/00* (2024.01)  *G06T 5/50* (2006.01)
*G06T 7/277* (2017.01)  *G06T 7/254* (2017.01)
*H04N 5/268* (2006.01)  *H04N 9/64* (2023.01)
*H04N 9/71* (2006.01)  *H04N 7/15* (2006.01)
*H04N 5/21* (2006.01)  *G06T 5/70* (2024.01)

(52) Cooperative Patent Classification (CPC):
**G06T 5/70; G06T 5/50; G06T 7/254; G06T 7/277;**
G06T 2207/10016; G06T 2207/20028;
G06T 2207/20182; G06T 2207/20221; H04N 5/21;
H04N 9/646

(86) International application number:
**PCT/CN2020/095359**

(87) International publication number:
**WO 2021/114592 (17.06.2021 Gazette 2021/24)**

(54) **VIDEO DENOISING METHOD, DEVICE, TERMINAL, AND STORAGE MEDIUM**

VERFAHREN ZUM ENTRAUSCHEN VON VIDEOS, VORRICHTUNG, ENDGERÄT UND SPEICHERMEDIUM

PROCÉDÉ DE DÉBRUITAGE DE VIDÉO, DISPOSITIF, TERMINAL ET SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2019 CN 201911288617**

(43) Date of publication of application:
**04.05.2022 Bulletin 2022/18**

(73) Proprietor: **Tencent Technology (Shenzhen) Company Limited**
**Shenzhen, Guangdong, 518057 (CN)**

(72) Inventors:
• **LI, Benchao**
**Shenzhen, Guangdong, 518057 (CN)**
• **LI, Feng**
**Shenzhen, Guangdong, 518057 (CN)**
• **LIU, Chenghao**
**Shenzhen, Guangdong, 518057 (CN)**
• **LIU, Yi**
**Shenzhen, Guangdong, 518057 (CN)**
• **AI, Tong**
**Shenzhen, Guangdong, 518057 (CN)**

(74) Representative: **Novagraaf International SA**
**Chemin de l'Echo 3**
**1213 Onex, Geneva (CH)**

(56) References cited:
CN-A- 102 769 722     CN-A- 104 735 300
CN-A- 109 410 124     CN-A- 110 933 334
US-A1- 2018 220 129

• ZUO CHENGLIN ET AL: "Video Denoising Based on a Spatiotemporal Kalman-Bilateral Mixture Model", vol. 2013, 1 January 2013 (2013-01-01), pages 1 - 10, XP055942953, Retrieved from the Internet <URL:http://downloads.hindawi.com/ journals/tswj/2013/438147.pdf> DOI: 10.1155/ 2013/438147

• PFLEGER SERGIO G ET AL: "Real-time video denoising on multicores and GPUs with Kalman-based and Bilateral filters fusion", JOURNAL OF REAL-TIME IMAGE PROCESSING, SPRINGER, DE, vol. 16, no. 5, 8 February 2017 (2017-02-08), pages 1629 - 1642, XP036903680, ISSN: 1861-8200, [retrieved on 20170208], DOI: 10.1007/S11554-016-0659-Y

• ANONYMOUS: "5/25/2010 1 Image Filtering", 25 May 2010 (2010-05-25), XP055422823, Retrieved from the Internet <URL:https://www.cs.auckland.ac.nz/courses/compsci373s1c/PatricesLectures/Image Filtering_2up.pdf> [retrieved on 20171108]

**Description**

RELATED APPLICATION

The present disclosure claims priority to Chinese Patent Application No. 201911288617.7, entitled "METHOD AND APPARATUS FOR DENOISING VIDEO, TERMINAL, AND STORAGE MEDIUM" filed on December 12, 2019 with China National Intellectual Property Agency.

FIELD OF THE TECHNOLOGY

The present disclosure relates to the field of multimedia technologies, and in particular to a method and an apparatus for denoising a video, a terminal, and a storage medium.

BACKGROUND OF THE DISCLOSURE

With development of multimedia technologies, more and more medium and large enterprises treat office collaboration products as indispensable meeting tools. Remote video conferencing is an important issue of office collaboration, which brings great convenience for enterprises. Generally, there is much noise in a video which is captured via a camera, during communication in a remote video conference. The video conference would be of poor quality when such noise is not suppressed.

In conventional technology, when filtering a video image, neighbor pixels of a subsequently processed pixel often include a pixel that is precedently processed. That is, the subsequently processed pixel is dependent on the precedently processed pixels. Hence, the filtering is implemented as a serial process, which reduces a speed of algorithm operations. As examples, document Video Denoising Based on a Spatiotemporal Kalman Bilateral Mixture Model (Scientific World Journal Volume 2013, Article ID 438147,10 pages) and Real-time video denoising on multicores and GPUs with Kalman-based and Bilateral filters fusion (J Real-Time Image Proc (2019) 16:1629-1642) disclose spatio-temporal Kalman-bilateral mixture models, in which the bilateral filtering and the Kalman filtering are parallel in the filtering schemes.

SUMMARY

A method and an apparatus for denoising a video and a storage medium are provided according to embodiments provided in the present disclosure.

A method for denoising a video is provided according to claim 1.

An apparatus for denoising a video is provided according to claim 9.

A non-volatile storage medium is provided according to claim 14.

Hereinafter details of one or more embodiments of the present disclosure are provided in drawings and descriptions. Other features, objectives, and advantages of the present disclosure would be obvious from specification, drawings, and claims.

BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.

Figure 1 is video images captured via a low-performance camera provided in a notebook computer according to an embodiment of the present disclosure.

Figure 2 is a schematic data flow in a video conference according to an embodiment of the present disclosure.

Figure 3 is a block diagram of a structure of a system for denoising a video according to an embodiment of the present disclosure.

Figure 4 is a flowchart of a method for denoising a video according to an embodiment of the present disclosure.

Figure 5 is a schematic diagram of image filtering having inter-pixel dependency according to an embodiment of the present disclosure.

Figure 6 is a schematic diagram of image filtering without inter-pixel dependency according to an embodiment of the present disclosure.

Figure 7 is a schematic diagram of comparing effects of spatial filtering modes according to an embodiment of the present disclosure.

Figure 8 is a schematic diagram of comparing images before and after denoising according to an embodiment of the present disclosure.

Figure 9 is a schematic flowchart of key steps in a method for denoising a video according to an embodiment of the present disclosure.

Figure 10 is a schematic flowchart of an algorithm of a method for denoising a video according to an embodiment of the present disclosure.

Figure 11 is a block diagram of an apparatus for denoising a video according to an embodiment of the present disclosure.

Figure 12 is a block diagram of a structure of a terminal according to an embodiment of the present disclosure.

DESCRIPTION OF EMBODIMENTS

In order to clarify objectives, technical solutions, and advantages of the present disclosure, hereinafter embodiments of the present disclosure are illustrated in detail in conjunction with the drawings.

Exemplary embodiments are described in detail herein, and examples of the embodiments are shown in the drawings. In the description concerning the drawings, identical reference numerals in different drawings represent the same or similar elements, unless otherwise indicated. Embodiments described herein do not cover all implementations that are consistent with the present disclosure. Rather, the implementations are merely exemplary methods and exemplary apparatuses, which are described in detail in the appended claims and in consistent with some aspects of the present disclosure.

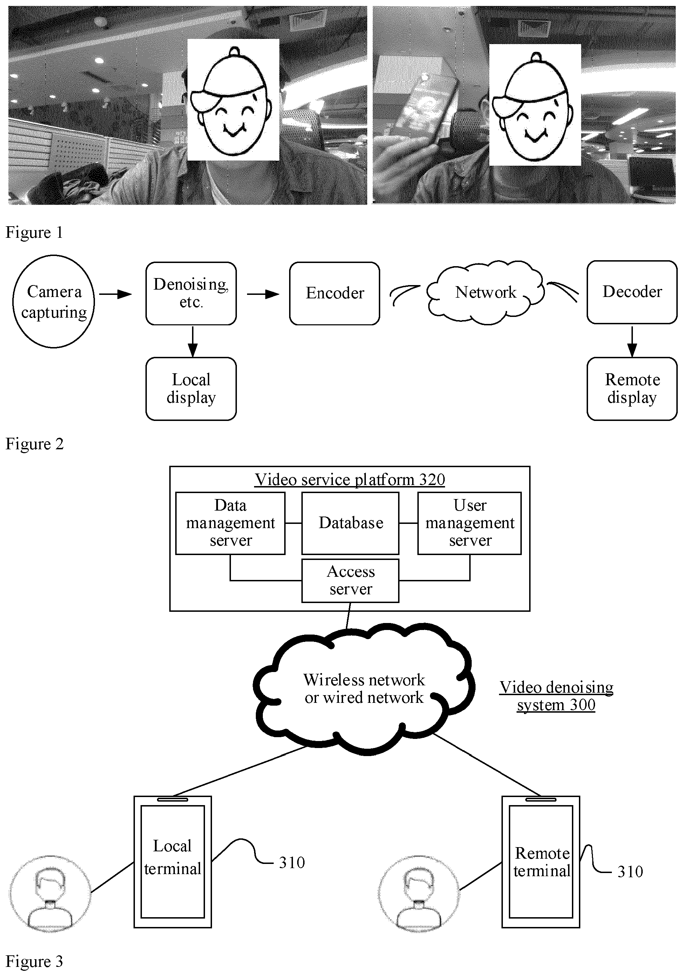

Embodiments of the present disclosure relate mainly to a scenario of denoising videos, and denoising on a remote conference video is taken as an example for illustration. Remote video conferencing is important among various functions of office collaboration products, and has a quite strict requirement on captured videos. Generally, it requires a high-definition camera to capture videos. The videos would have noise when being captured by a low-performance camera, and experience of the video conference would be drastically reduced when such noise are not processed. For example, reference is made to Figure 1, which shows images captured by a low-performance camera provided in a notebook computer. There is much noise in the captured video images as shown in Figure 1. Solutions in embodiments of the present disclosure may further be applied to denoising a video captured by a camera of a mobile phone during a video call, denoising on a video captured by a monitoring device, or the like. Specific applications are not limited herein.

Hereinafter a method for denoising a video according to embodiments of the present disclosure is briefly introduced. Usually, it is necessary to denoise camera-captured videos, such that these videos can meet a requirement of remote video conferences. Currently, various methods are applied to video denoising, where an algorithm concerning the video denoising is generally executed on a central processing unit (CPU) of a terminal. Besides remote video conferencing, an office collaboration product further has various functions such as process approval and project management. In a case that the function of remote video conferencing occupies most of CPU resources, the other functions of the office collaboration product would not operate normally, or the office collaboration product would have a high requirement on CPU processing capabilities and thus cannot be used in most scenarios. In embodiments of the present disclosure, inter-pixel dependency is not introduced in the method for denoising the video, so as to meet a requirement of parallel computation. Since a graphics processing unit (GPU) is stronger in parallel computation than the CPU, the method for denoising the video according to the embodiments of the present disclosure calls Metal (an image processing interface provided by Apple Inc.) or DirectX (an image processing interface provided by Microsoft Inc.) provided by the GPU, instead of using the CPU, to implement parallel processing on the pixels. Thereby, when denoising the videos, a speed of the processing is improved and occupation of the CPU is reduced. That is, the method according to embodiments of the present disclosure can achieve fast video denoising with low CPU occupancy. The denoised video stream is then transmitted to a remote display. Hence, a desirable experience of the video conference is ensured, while a lot of CPU resources are spared for other functions of the office collaboration products. The foregoing process may refer to Figure 2, which is a schematic data flow of a video conference according to an embodiment of the present disclosure. As shown in Figure 2, a video image that is captured by a camera and processed, e.g. denoised, is locally displayed, for example, on a screen of a notebook computer. An encoder encodes the denoised video image, and transmits the encoded video image to a remote terminal via a network. A decoder at the remote terminal decodes the encoded video image, and displays the decoded image at the remote terminal. The remote terminal may also be a notebook computer.

Figure 3 is a block diagram of a structure 300 of a system for denoising a video according to an embodiment of the present disclosure. The system 300 may be configured to implement video denoising, and includes a terminal 310 and a video service platform 320.

The terminal 310 may be connected to the video service platform 320 via a wireless network or a wired network. The terminal 310 may be at least one of: a smartphone, a video camera, a desktop computer, a tablet computer, a MP4 player, or a laptop portable computer. An application that supports remote video conferencing is installed and executable on the terminal 310. Optionally, the terminal 310 may be used by a user, who logs in the application running on the terminal 310 through an account of the user.

The video service platform 320 includes at least one of: a server, multiple servers, or a cloud computing platform. The video service platform 320 is configured to provide a background service for remote video conferences, such as user management and video stream forwarding. Optionally, the video service platform 320 includes an access server, a data management server, a user management server, and a database. The access server is configured to provide an access service for the terminal 310. The data management server is configured to, for example, forward a video stream uploaded by the terminal. There may be one or more data management servers. In case of multiple data management servers, at least two of the data management servers are configured to provide different services, and/or, at least two of the data management servers are configured to provide the same service. For example, the same service is provided according to a load-balance rule, or provided by a master server and a mirror server, which is not limited herein. The database is configured to store account information of the user. The account information has been collected under authorization of the user.

Generally, the terminal 310 may refer to one of multiple terminals. In this embodiment, as an example, there are only the local terminal 310 and two remote terminals 310. Those skilled in the art can appreciate that that there may be more or fewer terminals. For example, a quantity of the remote terminals may be one, dozens, hundreds, or even more. The quantity and a type of the terminals 310 are not limited herein.

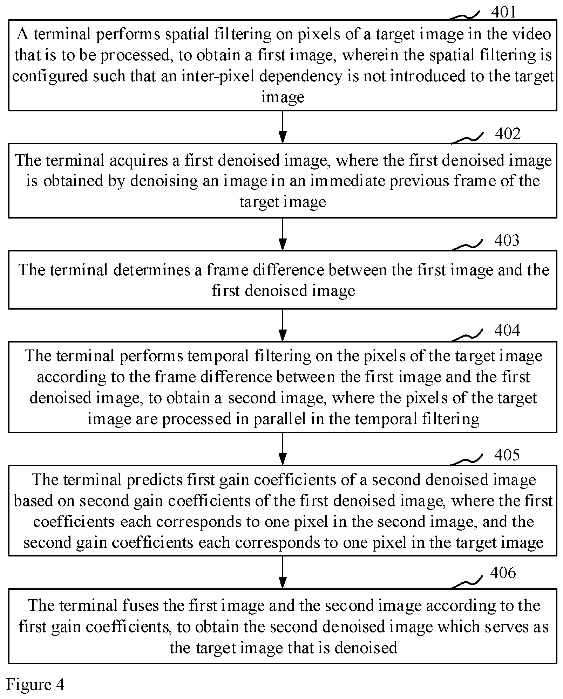

Figure 4 is a flowchart of a method for denoising a video according to an embodiment of the present disclosure. As shown in Figure 4, the method includes following steps S401 to S406.

In step 401, a terminal performs spatial filtering on pixels of a target image in a video that is to be processed, to obtain a first image. The spatial filtering is configured such that an inter-pixel dependency is not introduced to the target image.

In this embodiment, the terminal implements the spatial filtering on the pixels of the target image via a first filter. That is, the target image is inputted into the first filter, and after the spatial filtering, the first image is outputted from the first filter. The first filter is a bilateral filter, which is improved. The first filter is capable to process the pixels of the target image in parallel.

Hereinafter the first filter is illustrated.

In the field of image denoising, a bilateral filtering algorithm is non-linear and edge-preserving, and is a compromise which combines spatial proximity of an image and similarity among pixel values. In the bilateral filtering algorithm, both spatial information and gray-scale similarity are considered to achieve edge-preserving denoising, and is simple, non-iterative, and local. The edge-preserving denoising refers to replacing an original pixel value of a currently processed pixel with an average of values of pixels in neighborhood of such pixel. When a to-be-processed image is filtered via the bilateral filter based on the bilateral filtering algorithm, pixels in the entire image is generally scanned with a filter template, in a left- right then top-bottom order (or top-bottom then left-right order, or another sequence for scanning the whole image). When a pixel is processed in the spatial filtering, linear or non-linear calculation is generally performed on neighbor pixels of such pixel. When filtering a video image, neighbor pixels of a subsequently processed pixel often include a pixel that is precedently processed. Hence, the subsequently processed pixel is dependent on the precedently processed pixels, which makes the spatial filtering on the entire image become a serial process. Herein, not introducing an inter-pixel dependency refers to not introducing the aforementioned dependency among the pixels.

A principle of the first filter may be described by following equations (1) and (2).

$$\tilde{I}(p) = \frac{\sum_q I(p)\omega(p,q)}{\sum_q \omega(p,q)} \tag{1}$$

$$\omega(p,q) = g_{\sigma_s}(\|p-q\|)g_{\sigma_r}(\|I(p)-I(q)\|) \tag{2}$$

$\tilde{I}(p)$ presents a pixel value of a current pixel location in an image after being processed in spatial filtering. $I(p)$ represents a pixel value of the current pixel location in the image before being processed in the spatial filtering. $I(q)$ represents a pixel value of a neighbor pixel location, which is of the current pixel location and in the image. $p$ represents coordinates of the current pixel location in the image. $q$ represents coordinates of the neighbor pixel location. $\omega(p, q)$ indicates a weight related to coordinates of the pixel locations. $g(\cdot)$ represents a Gaussian function, and $\sigma_s$ and $\sigma_r$ represent variances of the Gaussian functions, respectively.

For the neighbor pixel location processed precedently to the current pixel location, the corresponding $I(q)$ uses the pixel value after being processed in the spatial filtering. For the neighbor pixel location processed subsequently to the current pixel location, the corresponding $I(q)$ uses the pixel value before being processed in the spatial filtering.

It is appreciated that the neighbor pixel location of the current pixel location refers to a pixel location located within neighborhood of the current pixel location. A quantity of the neighbor pixel locations is different when a dimension of the neighborhood is different. The neighborhood of a pixel may refer to 4-neighbor, i.e. an upper neighbor, a lower neighbor, a left neighbor, and a right neighbor. In such case, the neighbor pixels of a pixel location are four adjacent pixel locations on top, bottom, left, and right of such pixel location. The neighborhood of a pixel may refer to 8-neighbor, i.e. an upper neighbor, an upper-left neighbor, an upper-right neighbor, a lower neighbor, a lower-left neighbor, a lower-right neighbor, a left neighbor, and a right neighbor. In such case, the neighbor pixel locations of a pixel location are the eight pixel locations surrounding such pixel. It is appreciated that the neighborhood of a pixel may also be otherwise defined in another embodiment.

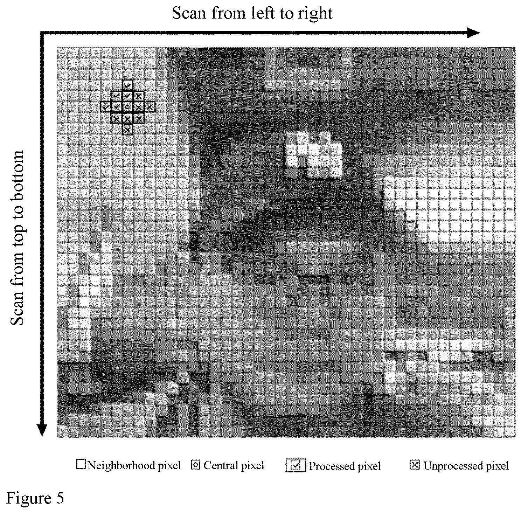

For example, reference is made to Figure 5, which shows image filtering without introducing an inter-pixel dependency. In Figure 5, a pixel location that is currently processed serves as a central pixel location, and the central pixel location corresponds to 12 neighbor pixel locations. The neighbor pixel locations located at up-left of the central pixel have been processed, while the neighbor pixels located at right of or below the central pixel have not been processed.

Such spatial filtering processes the pixel locations in serial, and hence consumes more time than parallel processing. In embodiments of the present disclosure, an improvement is made to such spatial filtering. That is, the foregoing bilateral filter is improved, and the inter-pixel dependency is not introduced to obtain the first filter. The first filter is still established on a basis of a bilateral filtering algorithm, while a difference lies in a following aspect. When a pixel location in the target image is processed based on the above equations (1) and (2), the pixel values of all the neighbor pixel locations, that is, all the $I(q)$ s, use the pixel values before being processed in the spatial filtering. That is, the pixel values after being processed in the spatial filtering are not used. Therefore, the pixel value of each pixel location no longer depends on that of a pixel location that is precedently processed. An influence of a processing result of the pixel location, which is processed precedently to the current pixel location, on the current pixel location is not introduced.

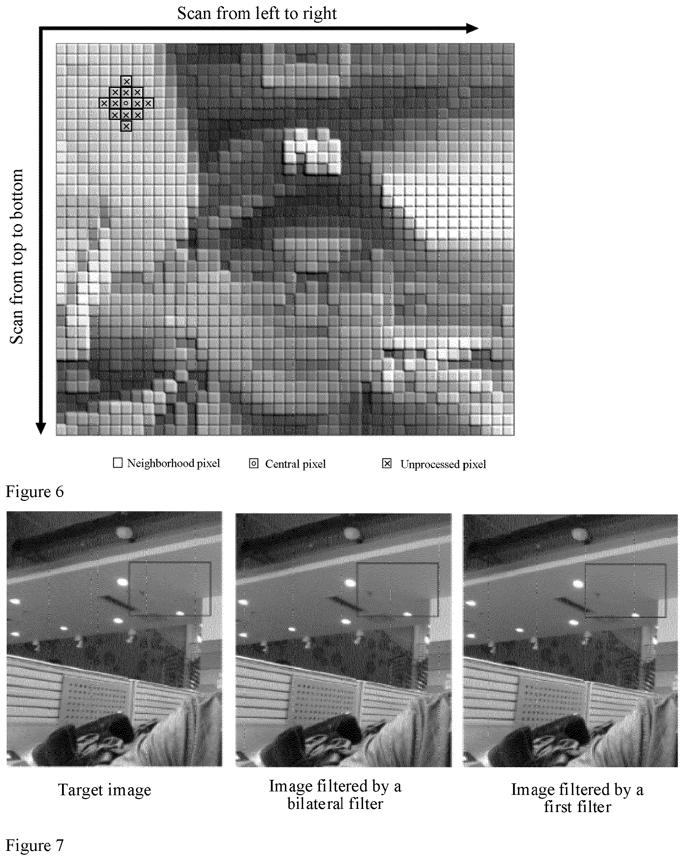

For example, reference is made to Figure 6, which is a schematic diagram of image filtering in which the inter-pixel dependency is not introduced according to an embodiment of the present disclosure. In Figure 6, a pixel that is currently processed serves a central pixel location, and the central pixel corresponds to 12 neighbor pixel locations. All of the 12 neighbor pixel locations have not been processed, that is, pixel values of all the neighbor pixel locations use the pre-spatial-filtering pixel values.

Since the inter-pixel dependency are not introduced, the terminal performs identical processing on each pixel in the spatial filtering via the first filter. The operations may be as follows. For each pixel location in the target image, the terminal may acquire pre-spatial-filtering pixel values of neighbor pixel locations of such pixel location, and then may process such pixel location in the spatial filtering via the first filter according to the pre-spatial-filtering pixel values of the neighbor pixel locations, to obtain a post-spatial-filtering pixel value of such pixel location. The first image is obtained when the terminal finishes the above operations on all pixel locations in the target image via the first filter. Pixel values of pixel locations in the first image are the post-spatial-filtering pixel values. Reference is made to Figure 7, which is a schematic diagram of comparing effects of spatial filtering modes according to an embodiment of the present disclosure. As an example, Figure 7 shows the target image, the target image filtered via a bilateral filter, and the target image filtered via the first filter.

Since a GPU has a stronger capability of parallel computation than a CPU, another improvement is made to the foregoing process according to embodiments of the present disclosure. That is, the terminal may call an image processing interface provided by the GPU, such as the Metal or the DirectX. Thereby, the step of performing the spatial filtering on the pixels of the target image can be transferred to the GPU for implementation.

Correspondingly, the terminal may further call the image processing interface of the GPU to acquire the pixels of the target image in parallel, and perform the spatial filtering on the pixels acquired in parallel. Thereby, the spatial filtering can be performed in parallel on the pixels of the target image in the to-be-processed video. The entire spatial filtering process is accelerated, CPU resources are saved, and an occupancy rate of the CPU is reduced.

In step 402, the terminal acquires a first denoised image. The first denoised image is obtained by denoising an image corresponding to a frame that is immediately before a frame of the target image.

In this embodiment, after performing the spatial filtering on the pixels of the target image, the terminal further performs temporal filtering on the pixels of the target image. Before the temporal filtering is performed, the terminal aquires the first denoised image corresponding to the frame immediately before the frame of the target image. The temporal filtering is subsequently performed on the target image based on the first denoised image and the forgoing first image.

In step 403, the terminal determines a frame difference between the first image and the first denoised image.

In this embodiment, after acquiring the first denoised image, the terminal may store a post-denoising pixel value at each pixel location in the first denoised image, as a two-dimensional array. Similarly, the terminal may also store a post-filtering pixel value of each pixel location in the first image, as another two-dimensional array. The pixels of the first image and the pixels of the first denoised image are in a one-to-one correspondence. A size of each two-dimensional array is equal to a product of a height of the target image and a width of the target image. For each pixel location, the terminal calculates a difference between the post-denoising pixel value at such pixel location in the first denoised image and the corresponding post-filtering pixel value at such pixel location the first image, and the difference serves as a pixel-level frame difference corresponding to such pixel location. Thus, the frame difference between the first image and the first denoised image can be obtained, and the frame difference may be in the form of a two-dimensional array.

In step 404, the terminal performs temporal filtering on the pixels of the target image according to the frame difference between the first image and the first denoised image to obtain a second image, where the pixels of the target image are processed in parallel in the temporal filtering.

In this embodiment, after obtaining the frame difference between the first image and the first denoised image, the terminal inputs the frame difference into a second filter, and perform the temporal filtering via the second filter. The second image serves an output of the second filter. The second filter is a Kalman filter that may be improved, where the Kalman filter is based on a Kalman filtering algorithm. That is, another improvement in embodiments of the present disclosure is improving the Kalman filter to obtain the second filter.

Hereinafter the second filter is illustrated.

Temporal filtering based on the Kalman filtering algorithm mainly includes two steps, i.e. prediction and correction. During the prediction, the terminal predicts a pixel value and variance at any pixel location in the target image based on a post-denoising pixel value and variance at such pixel location in the first denoised image. During the correction, the terminal determines a gain coefficient corresponding to each pixel location. Further, the terminal determines a first pixel value at such pixel location after the temporal filtering according to the gain coefficient, a pixel value at such pixel location in the target image, and a post-denoising pixel value at such pixel location in the first denoised image. The gain coefficient is a parameter reflecting a relationship between pixel values at a corresponding pixel location in images of two frames.

The foregoing process may be implemented with reference to following equations (3) to (7).

$$x_k^- = \hat{x}_{k-1} \tag{3}$$

$x_k^-$ represents a predicted pixel value at a pixel location in the target image, and $\hat{x}_{k-1}$ represents a corresponding post-denoising pixel value at the pixel location in the first denoised image.

$$P_k^- = P_{k-1} + Q \tag{4}$$

$P_k^-$ represents predicted variance at the pixel location in the target image. $P_{k-1}$ represents corresponding variance at the pixel location in the first denoised image. $Q$ represents a variance-offset coefficient, which is an empirical parameter in the Kalman filter algorithm. In an embodiment, $Q$ is a constant.

$$K_k = P_k^-(P_k^- + R)^{-1} \tag{5}$$

$K_k$ represents a corresponding gain coefficient at the pixel location in a predicted denoised image for the target image. $R$ represents a gain-offset coefficient, which is an empirical parameter in the Kalman filter algorithm. In an embodiment, R is a parameter that changes iteratively. Both Q and R are empirical parameter factors, and may be adjusted to acquire Kalman filters with different performances.

$$x_k = x_k^- + K_k(z_k - x_k^-) \tag{6}$$

where $x_k$ represents a post-temporal-filtering pixel value at the pixel location, and $z_k$ represents a pixel value at the pixel location in the first image.

$$P_k = (1 - K_k)P_k^- \tag{7}$$

$P_k$ represents variance at such pixel location, which would be used for an image of the next frame.

In order to accelerate the algorithm, the frame difference is introduced when calculating the variance, in the method for denoising the video according to embodiments of the present disclosure. Thereby, the equation (4) is optimized to obtain an equation (8).

$$P_k^- = P_{k-1} + \Delta^2 Q \qquad (8)$$

$\Delta$ represents the frame difference between the first image and the first denoised image.

In order to address motion jitters in a filtering process of the denoising, equations (9) and (10) are introduced in the method for denoising the video according to embodiments of the present disclosure. Thereby, the equation (5) is optimized to obtain an equation (11).

$$R_k = 1 + R_{k-1}(1 + K_{k-1})^{-1} \qquad (9)$$

$R_k$ represents a gain-offset coefficient at the pixel location, and corresponds to the target image. $R_{k-1}$ represents a corresponding gain offset coefficient at the pixel location in the first denoised image. $K_{k-1}$ represents a gain coefficient corresponding to the pixel in the first denoised image.

$$U_k = 1 - \Delta^{\frac{1}{4}} \qquad (10)$$

$U_k$ presents a motion compensation coefficient.

$$K_k = P_k^- (P_k^- + R_k U_k)^{-1} \qquad (11)$$

Correspondingly, the forgoing operation can be implemented through following sub-steps 4041 to 4044. Since the terminal can perform the temporal filtering on the pixels of the target image, which are processed in parallel, an arbitrary pixel location in the target image is taken as an example for illustration in sub-steps 4041 to 4044. Any other pixel location is processed in the same manner as the exemplary pixel location. The second image is obtained when all the pixel locations in the target image have been processed by the terminal.

In step 405, the terminal predicts first gain coefficients of a second denoised image based on second gain coefficients of the first denoised image, where the first gain coefficient each corresponds to one pixel location in the second image, and the second gain coefficient each corresponds to one pixel location in the target image. For details, reference is further made to sub-steps 4041 to 4044.

In step 4041, the terminal determines second variance of a pixel location according to corresponding first variance of the pixel location in the first denoised image, the frame difference between the first image and the first denoised image, and a variance offset coefficient.

For example, the corresponding first variance at the pixel location in the first denoised image is $P_{k-1}$, the frame difference between the first image and the first denoised image is $\Delta$, and the variance offset coefficient is $Q$. The second variance $P_k^-$ of the pixel may be calculated based on the equation (8).

In step 4042, the terminal acquires a corresponding second gain coefficient and a corresponding second gain-offset coefficient at the pixel location in the first denoised image, and determines a corresponding first gain-offset coefficient of the pixel location according to the second gain coefficient and the second gain-offset coefficient.

For example, the corresponding second gain coefficient at the pixel location in the first denoised image is $K_{k-1}$, the corresponding second gain-offset coefficient at the pixel location in the first denoised image is $R_{k-1}$. The corresponding first gain-offset coefficient $R_k$ of the pixel location may be calculated based on the equation (9).

In step 4043, the terminal determines a corresponding motion compensation coefficient of the pixel location according to the frame difference.

For example, the frame difference is $\Delta$. The corresponding motion compensation coefficient $U_k$ of the pixel location may be calculated based on the equation (10).

In step 4044, the terminal determines the corresponding first gain coefficient at the pixel location according to the second variance, the corresponding first gain-offset coefficient, and the motion compensation coefficient, which are of the pixel location.

For example, the corresponding first gain coefficient $K_k$ at the pixel location is calculated based on the equation (11) according to the second variance $P_k^-$, the first gain offset coefficient $R_k$, and the motion compensation coefficient $U_k$ obtained through sub-steps 4041 to 4043.

After obtaining the corresponding first gain coefficient $K_k$ at the pixel location, the terminal may further determine third variance $P_k$ at the pixel location, which would be used for an image of the next frame based on the equation (7) and the second variance $P_k^-$.

In step 406, the terminal fuses the first image and the second image according to the first gain coefficients to obtain the second denoised image which serves as the target image that is denoised.

In this embodiment, when performing the temporal filtering on the pixels of the target image to obtain the second image, the terminal also obtains the first gain coefficients at pixel locations in the second image. For each pixel location, the terminal may calculate a product of a difference, between the corresponding first gain coefficient $K_k$ at such pixel location and a preset value, and a first pixel value $x_k$ of such pixel location as a first fusion value, and calculate a product of the corresponding first gain coefficient at such pixel location and a second pixel value $z_k$ of such pixel location as a second fusion value. The first pixel value is the pixel value at such pixel location after the temporal filtering, and the second pixel value is the pixel value of the pixel after the spatial filtering. The terminal sums the first fusion value and the second fusion value to obtain the corresponding post-denoising pixel value at such pixel location. Accordingly, the sum operation may be implemented according to an equation (12).

$$\hat{x}_k = (1 - K_k)x_k + K_k z_k \tag{12}$$

$\hat{x}_k$ represents the corresponding post-denoising pixel value at the pixel location.

After acquiring the first gain coefficients in the second denoised image, which correspond to the pixels in the second image, the terminal may use the first gain coefficients as weighting coefficients for fusing the first image and the second image. Optionally, a difference between the first gain coefficient in the second denoised image, which corresponds to a pixel in the second image, and a preset value 1 serves as a fusion weight for such pixel in the second image. Further, the first gain coefficient in the second denoised image, which corresponds to the pixel in the second image, serves as a fusion weight for a corresponding pixel in the first image. Thereby, the pixel values of the first image and the second image are weighted and fused to obtain the second denoised image.

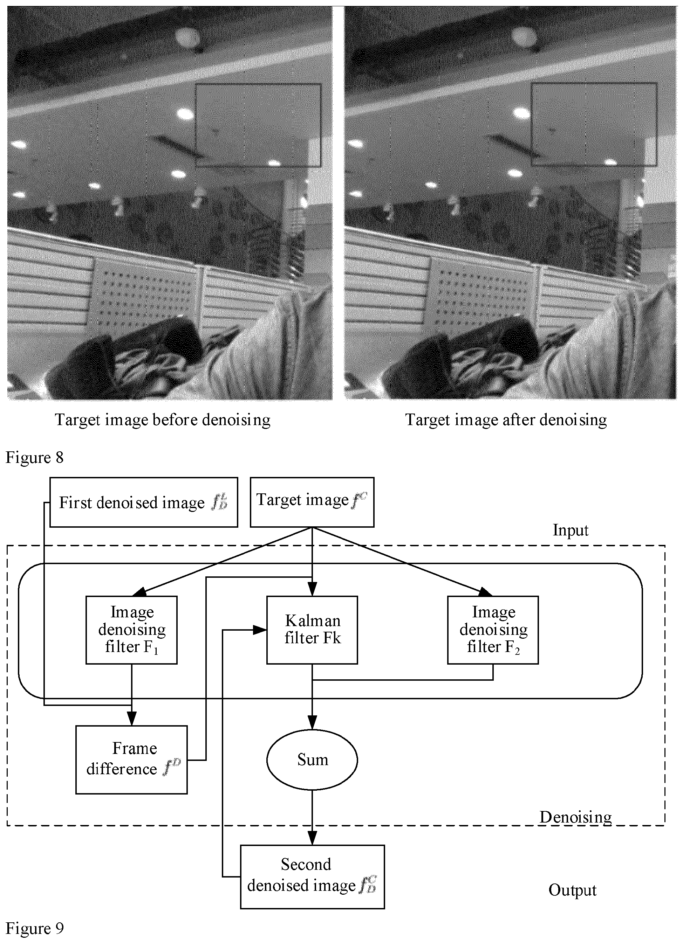

The denoised target image is obtained when fusion has been performed on all pixel locations. For example, reference is made to Figure 8, which is a schematic diagram of comparing images before and after denoising according to an embodiment of the present disclosure. Figure 8 includes a target image before being denoised and the target image after being denoised. As can be seen from Figure 8, the noise in the target image after being denoised is significantly reduced in comparison with the target image before being denoised. That is, the method for denoising the video according to embodiments of the present disclosure achieves effect denoising on the target image.

The forgoing steps 401 to 406 are an optional implementation of the method for denoising the video according to embodiments of the present disclosure. The corresponding method may be performed in a sequence other than operating from steps 401 to 406. Alternatively and optionally, a third filter is provided. The third filter has a structure identical to that of the first filter. The third filter, the first filter, and the second filter process the pixels in the target image in parallel, by calling the image processing interface of the GPU, so as to implement denoising on the target image.

For example, reference is made to Figure 9, which is a schematic flowchart of key steps in a method for denoising a video according to an embodiment of the present disclosure. As shown in Figure 9, there are three parts, i.e., an input, denoising processing, and an output. The target image $f^C$ and the first denoised image $f_D^L$ serves as inputs. During the denoising, the first filter and the third filter are represented by image denoising filters $F_1$ and $F_2$, respectively. The second filter is represented by a Kalman filter Fk. Parallel acceleration is achieved through an image processing interface of a GPU. When denoising the target image, the terminal processes the target image $f^C$ via the image denoising filter $F_1$ to obtain a first image $f_{F_1}^C$, calculates a frame difference $f^D$ between the first denoised image $f_D^L$ and the first image $f_{F_1}^C$ according to a result of the processing, inputs the frame difference $f^D$ and the target image $f^C$ into the Kalman filter Fk, and fuses an output from the Kalman filter Fk, i.e., the second image, and an output from the image denoising filter $F_2$ to

obtain a second denoised image $f_D^C$, which serves as the denoised target image. In another embodiment, the second denoised image may further be stored in the Kalman filter, in order to participate in subsequent image computation.

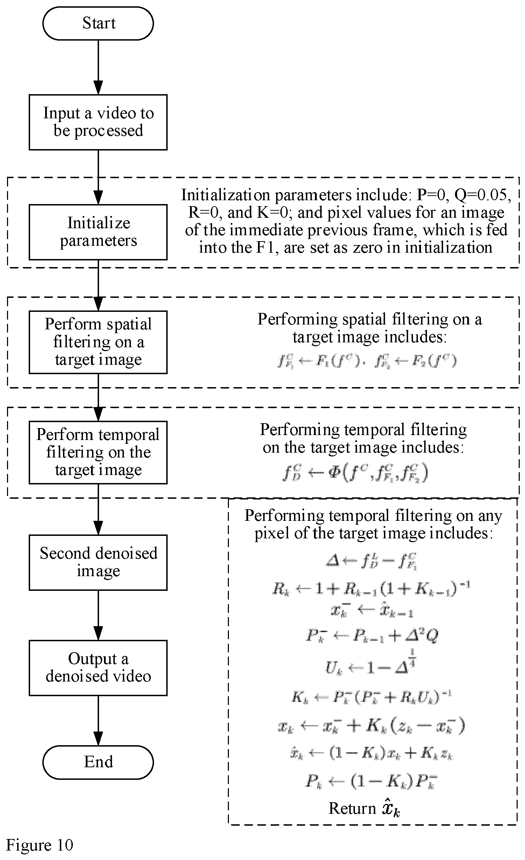

An algorithm corresponding to the flow as shown in Figure 9 may refer to Figure 10. Figure 10 is a schematic flowchart of an algorithm of a method for denoising a video according to an embodiment of the present disclosure. In Figure 10, initialization parameters include: P=0, Q=0.05, R=0, and K=0. Pixel values for an image of the immediate previous frame, which is fed into the F1, are set as zero in initialization. The spatial filtering performed on the target image includes:

$$f_{F_1}^C \leftarrow F_1(f^C), \quad f_{F_2}^C \leftarrow F_2(f^C)$$

, in which the arrows represents assignment. The temporal filtering performed on the target image includes:

$$f_D^C \leftarrow \Phi(f^C, f_{F_1}^C, f_{F_2}^C)$$

. In the temporal filtering, processing on each pixel location of the target image includes:

$$\Delta \leftarrow f_D^L - f_{F_1}^C$$

for calculating the frame difference, $R_k \leftarrow 1 + R_{k-1}(1+K_{k-1})^{-1}$ for calculating the gain offset coefficient,

$$x_k^- \leftarrow \hat{x}_{k-1}$$

for using the corresponding post-denoising pixel value in the first denoised image as the predicted pixel value of such pixel location in the target image;

$$P_k^- \leftarrow P_{k-1} + \Delta^2 Q$$

for calculating the second variance;

$$U_k \leftarrow 1 - \Delta^{\frac{1}{4}}$$

for calculating the motion compensation coefficient;

$$K_k \leftarrow P_k^- (P_k^- + R_k U_k)^{-1}$$

for calculating the first gain coefficient;

$$x_k \leftarrow x_k^- + K_k(z_k - x_k^-)$$

for calculating the pixel value of the pixel location after the temporal filtering;

$\hat{x}_k \leftarrow (1-K_k)x_k + K_k z_k$ for calculating the post-denoised pixel value;

$$P_k \leftarrow (1 - K_k)P_k^-$$

for calculating variance which would be used for an image of the next frame ; and outputting the $\hat{x}_k$.

The inter-pixel dependency are not introduced when performing spatial filtering on the target image according to embodiments of the present disclosure. Hence, the GPU can perform computation on the pixels in parallel. There is no inter-pixel dependency when performing temporal filtering on the image, and hence the GPU can further perform computation on the pixels in parallel. Hence, the entire video denoising can utilize parallel processing. In a case that the complex process of denoising is transferred to and implemented on the GPU, the CPU occupancy rate of the computer will be quite low. Optionally, in order to further accelerate the process of denoising, another improvement is made in the method for denoising the video according to embodiments of the present disclosure. The inputted image is configured to be in an YCbCr (YUV) format. When the image is denoised, the first filter and the second filter perform the spatial filtering and the temporal filtering, respectively, on a brightness component of the target image. That is, only the Y channel that represents information on brightness details is denoised.

A comparative experiment is illustrated to demonstrate an effect in saving the CPU occupancy rate when applying the method for denoising the video according to embodiments of the present disclosure. In the experiment, two notebook computers of different models are utilized. A result of comparison are as shown in Table 1.

Table 1

| Model | CPU occupancy rate without removing dependency or parallel computing on GPU | CPU occupancy rate with removing dependency and parallel computing on GPU |
|---|---|---|
| Notebook computer 1 | 12.34% | 0.24% |
| Notebook computer 2 | 8.71% | 0.76% |

As shown in Table 1, compared with the case without removing dependency or parallel computing on GPU, the CPU occupancy rate are significantly reduced when the dependency is not introduced and the parallel computation is conducted on GPU.

In embodiments of the present disclosure, the spatial filtering, in which the inter-pixel dependency is not introduced, is performed on the pixels of the target image, and therefore there is no dependency among pixel locations in the filtered target image. Pixels of the target image are processed in parallel in the temporal filtering according to the frame difference between the first image and the first denoised image that is obtained by the spatial filtering. Thereby, the video denoising is converted from a serial process to a parallel process, and hence is accelerated.

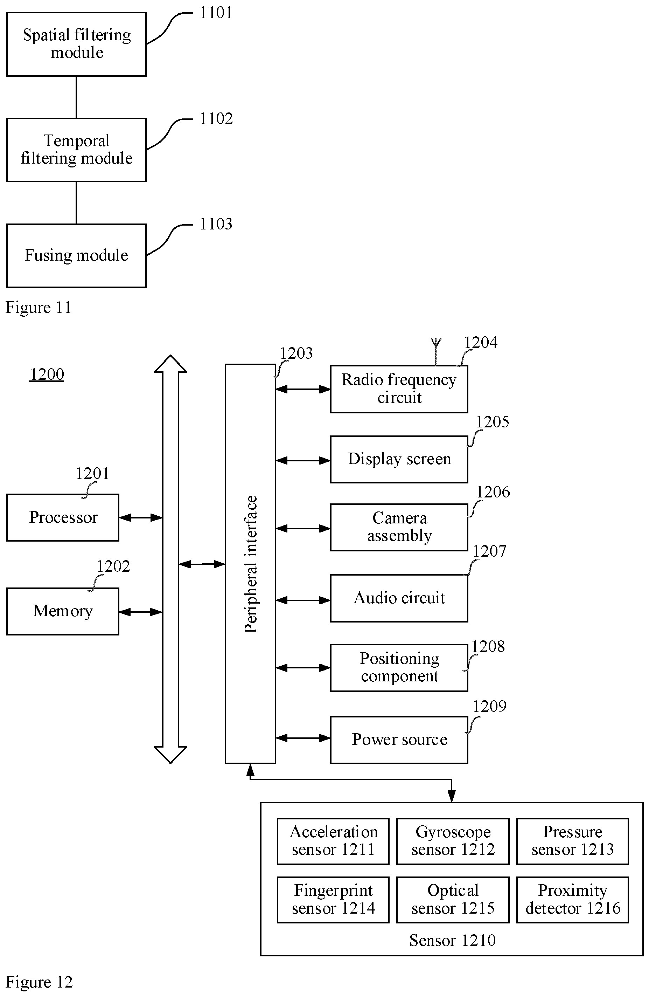

Figure 11 is a block diagram of an apparatus for denoising the video according to an embodiment of the present disclosure. The apparatus is configured to perform steps in the above method for denoising the video. Reference is made to Figure 11, in which the apparatus includes: a spatial filtering module 1101, a temporal filtering module 1102, and a fusing module 1103. A part or the whole of each module in the apparatus for denoising the video may be implemented through software, hardware, or a combination of the two.

The spatial filtering module 1101 is configured to perform spatial filtering on pixels of a target image in the video that is to be processed, to obtain a first image, where the spatial filtering is configured such that inter-pixel dependency is not introduced to the target image.

The temporal filtering module 1102 is configured to perform temporal filtering on the pixels of the target image according to a frame difference between the first image and a first denoised image to obtain a second image, where the pixels of the target image are processed in parallel in the temporal filtering, and the first denoised image is obtained by denoising an image corresponding to a frame that is immediately before a frame of the target image.

The fusing module 1103 is configured to predict first gain coefficients of a second denoised image based on second gain coefficients of the first denoised image, where the first gain coefficient each corresponds to one pixel location in the second image, and the second gain coefficients each corresponds to one pixel location in the target image; and fuse the first image and the second image according to the first gain coefficients to obtain the second denoised image, where the second denoised image serves as a result of denoising the target image.

In one embodiment, the spatial filtering module 1101 is further configured to, for each pixel in the target image in the video to be processed: acquire pixel values of neighbor pixels of said pixel, which are before being processed in the spatial filtering; and process said pixel in the spatial filtering according to the pixel values of the neighbor pixels which are before being processed in the spatial filtering.

In one embodiment, the apparatus further includes an interface calling module and a parallel acquisition module. The interface calling module is configured to call an image processing interface of a graphics processing unit. The parallel acquisition module is configured to acquire the pixels of the target image in parallel via the image processing interface, and perform the spatial filtering via the image processing interface on the pixels acquired in parallel.

In one embodiment, the temporal filtering module 1102 is further configured to acquire the pixels of the target image in parallel. The temporal filtering module 1102 is further configured to, for each pixel location in the target image: determine second variance of said pixel location according to corresponding first variance of said pixel location in the first denoised image, the frame difference between the first image and the first denoised image, and a variance offset coefficient; determine a corresponding first gain coefficient at said pixel location according to the second variance, a corresponding first gain-offset coefficient, and a motion compensation coefficient, which are of said pixel location; and determine a first pixel value at said pixel location, which is after being processed in the temporal filtering, according to the first gain coefficient, a pixel value at said pixel location in the target image, and a post-denoising pixel value at said pixel location in the first denoised image. The temporal filtering module 1102 is further configured to obtain the second image according to the first pixel value at each pixel location which is after being processed in the temporal filtering.

In an embodiment, the apparatus further includes a first determination module. The first determination module is configured to determine the motion compensation coefficient according to the frame difference.

In an embodiment, the apparatus further includes an acquisition module and a second determination module. The acquisition module is configured to acquire a corresponding second gain coefficient and a corresponding second gain-offset coefficient at said pixel location in the first denoised image. The second determination module configured to determine the corresponding first gain-offset coefficient at said pixel location according to the second gain coefficient and the second gain-offset coefficient.

In one embodiment, the temporal filtering module 1102 is further configured to, for each pixel location in the second image: determine a product of a difference, between the corresponding first gain coefficient at said pixel location and a preset value, and the first pixel value at said pixel location to be a first fusion value; determine a product of corresponding first gain coefficient at said pixel location and a second pixel value at said pixel location to be a second fusion value, where the second pixel value is a pixel value at said pixel location in the first image; and sum the first fusion value and the second fusion value to obtain a pixel value at said pixel location which is after the denoising.

In one embodiment, both the spatial filtering and the temporal filtering process a brightness component at each pixel location.

In embodiments of the present disclosure, the spatial filtering, in which the inter-pixel dependency is not introduced, is performed on the pixels of the target image, and therefore there is no dependency among pixel locations in the filtered target image. Pixels of the target image are processed in parallel in the temporal filtering according to the frame difference between the first image and the first denoised image that is obtained by the spatial filtering. Thereby, the video denoising is converted from a serial process to a parallel process, and hence is accelerated.

The apparatus in the foregoing embodiments is divided into the above module according to functions, and such division is merely exemplary. In practice, the above functions may be allocated to different functional modules on requirement, that is, an internal structure of the apparatus may be divided into different functional modules, to complete all or part of the functions described above. In addition, the forgoing apparatus embodiments share a same concept with the method embodiments, and details of implementing the apparatus embodiments may refer to the method embodiment.

Figure 12 is a box diagram of a structure of a terminal 1200 according to an embodiment of the present disclosure. The terminal 1200 may be a smartphone, a tablet computer, a MP3 (Moving Picture Experts Group Audio Layer III) player, a MP4 (Moving Picture Experts Group Audio Layer IV) player, a notebook computer, or a desktop computer. The terminal 1200 may also be called another name, such as user equipment, a portable terminal, a laptop terminal, or a desktop terminal.

Generally, the terminal 1200 includes a processor 1201 and a memory 1202.

The processor 1201 may include one or more processing cores, and may be, for example, a 4-core processor or an 8-core processor. The processor 1201 may be implemented in hardware, embodied in at least one of: a digital signal processor (DSP), a field-programmable gate array (FPGA), and a programmable logic array (PLA). The processor 1201 may alternatively include a main processor and a co-processor. The main processor is a processor that is configured to process data in an awaking state, and is also referred to as a central processing unit (CPU). The co-processor is a low-power processor configured to process data in an idle state. In some embodiments, the processor 1201 may be integrated with a graphics processing unit (GPU). The GPU is responsible for rendering and drawing content to be displayed on a display screen. In some embodiments, the processor 1201 may further include an artificial intelligence (AI) processor. The AI processor is configured to process a calculating operation related to machine learning.

The memory 1202 may include one or more computer-readable storage media. The computer-readable storage medium may be non-transient. The memory 1202 may further include a high-speed random access memory, and a non-volatile memory, such as one or more magnetic disk storage devices and a flash storage device. In some embodiments, the non-transitory computer-readable storage medium in the memory 1202 is configured to store at least one instruction. The at least one instruction is configured to be executed by the processor 1201 to implement the method for denoising the image according to the method embodiments of the present disclosure.

In some optional embodiments, the terminal 1200 may include: a peripheral device interface 1203 and at least one peripheral device. The processor 1201, the memory 1202, and the peripheral device interface 1203 may be connected via a bus or a signal cable. Each peripheral device may be connected to the peripheral device interface 1203 via a bus, a signal cable, or a circuit board. In a specific embodiment, the peripheral device includes at least one of: a radio frequency circuit 1204, a touch screen 1205, a camera component 1206, an audio circuit 1207, a positioning component 1208, and a power supply 1209.

The peripheral device interface 1203 may be configured to connect the at least one peripheral device related to input/output (I/O) to the processor 1201 and the memory 1202. In some embodiments, the processor 1201, the memory 1202, and the peripheral device interface 1203 are integrated on a same chip or a same circuit board. In other embodiments, any one or two of the processor 1201, the memory 1202, and the peripheral device interface 1203 may be implemented on a separate chip or a separate circuit board. This embodiment is not limited thereto.

The radio frequency circuit 1204 is configured to receive and transmit a radio frequency (RF) signal, also called an electromagnetic signal. The RF circuit 1204 communicates with a communication network and another communication device through the electromagnetic signal. The RF circuit 1204 converts an electric signal into an electromagnetic signal for transmission, or converts a received electromagnetic signal into an electric signal. In some embodiments, the RF circuit 1204 includes: an antenna system, an RF transceiver, one or more amplifiers, a tuner, an oscillator, a digital signal processor, a codec chip set, a subscriber identity module card, and the like. The RF circuit 1204 may communicate with another terminal through at least one wireless communication protocol. The wireless communication protocol includes, but is not limited to, a metropolitan area network, a generation of a mobile communication network (2G, 3G, 4G, or 5G), a wireless local area network, and/or a wireless fidelity (WiFi) network. In some embodiments, the RF circuit 1204 may include a circuit related to near field communication (NFC). The present disclosure is not limited thereto.

The display screen 1205 is configured to display a user interface (UI). The UI may include a graphic, a text, an icon, a video, and any combination of the above. When the display screen 1205 is a touch screen, the display screen 1205 is further capable collect a touch signal on or above a surface of the display screen 1205. The touch signal may be inputted into the processor 1201 as a control signal for processing. In such case, the display screen 1205 may be further configured to provide a virtual button and/or a virtual keyboard, also called a soft button and/or a soft keyboard. In some embodiments, a quantity of the display screen 1205 may be one, and the display screen 1205 is disposed on a front panel of the terminal 1200. In other embodiments, there may be two display screens 1205, which are disposed on different surfaces, respectively, of the terminal 1200, or are designed in a foldable form. In other embodiments, the display screen 1205 may be a flexible display screen, disposed on a curved surface or a folded surface of the terminal 1200. The display screen 1205 may even be configured to have a non-rectangular irregular shape, that is, a specially shaped screen. The display screen 1205 may be manufactured as, for example, a liquid crystal display (LCD), or an organic light-emitting diode (OLED).

The camera component 1206 is configured to collect an image or a video. In some embodiments, the camera component 1206 includes a front-facing camera and a rear-facing camera. Generally, the front-facing camera is disposed on a front panel of the terminal, and the rear-facing camera is disposed on a back surface of the terminal. In some embodiments, there are at least two rear-facing cameras, each of which is any of a main camera, a depth-of-field camera, a wide-angle camera, and a telephoto camera, so as to implement a background-blurring function through fusion between the main camera and the depth-of-field camera, panoramic shooting and virtual-reality (VR) shooting functions through fusion between the main camera and wide-angle camera, or another fusion-shooting function. In some embodiments, the camera component 1206 may further include a flash light. The flash light may be a mono-color-temperature flash light or a dual-color-temperature flash light. The dual-color-temperature flash light refers to a combination of a warm-color flash light and a cold-color flash light, and may be configured to perform light compensation under different color temperatures.

The audio circuit 1207 may include a microphone and a loudspeaker. The microphone is configured to collect sound waves of a user and an environment, convert the sound waves into electrical signals, and input the electrical signals into the processor 1201 for processing or into the RF circuit 1204 for speech communication. Multiple microphones may be disposed at different portions of the terminal 1200 for stereo collection or noise reduction. The microphone may alternatively be a microphone array or an omnidirectional collection microphone. The loudspeaker is configured to convert electrical signals from the processor 1201 or the RF circuit 1204 into sound waves. The loudspeaker may be a conventional thin-film loudspeaker or a piezoelectric ceramic loudspeaker. When the loudspeaker is the piezoelectric ceramic loudspeaker, electrical signals can be converted into not only sound waves audible to human, but also inaudible sound waves for ranging or the like. In some embodiments, the audio circuit 1207 may further include an earphone jack.

The positioning component 1208 is configured to determine a current geographic location of the terminal 1200 for navigation or a location-based service (LBS). The positioning component 1208 may be a positioning component based on the global positioning system (GPS) of the United States, the COMPASS System of China, the GLONASS System of Russia, or the GALILEO System of the European Union.

The power supply 1209 is configured to supply power to a component in the terminal 1200. The power supply 1209 may be an alternating current, a direct current, a primary battery, or a rechargeable battery. When the power supply 1209 includes the rechargeable battery, the rechargeable battery may be a wired rechargeable battery or a wireless rechargeable battery. The rechargeable battery may be further configured to support fast-charge technology.

In some embodiments, the terminal 1200 may also include one or more sensors 1210. The one or more sensors 1210 include, but are not limited to, an acceleration sensor 1211, a gyroscope sensor 1212, a pressure sensor 1213, a fingerprint sensor 1214, an optical sensor 1215, and a proximity sensor 1216.

The acceleration sensor 1211 may detect magnitude of acceleration on three coordinate axes of a coordinate system established with the terminal 1200. For example, the acceleration sensor 1211 may be configured to detect components of gravity acceleration along the three coordinate axes. The processor 1201 may control the touch screen 1205 to display the user interface in a landscape view or a portrait view according to a gravity acceleration signal collected by the acceleration sensor 1211. The acceleration sensor 1211 may be further configured to collect motion data of a game or a user.

The gyroscope sensor 1212 may detect a body direction and a rotation angle of the terminal 1200. The gyroscope sensor 1212 may cooperate with the acceleration sensor 1211 to collect a 3D action performed by the user on the terminal 1200. The processor 1201 may implement following functions according to data collected by the gyroscope sensor 1212: motion sensing (for example, the UI is changed according to a tilt operation of the user), image stabilization during shooting, game control, and inertial navigation.

The pressure sensor 1213 may be disposed on a side frame of the terminal 1200 and/or a lower layer of the touch screen 1205. When the pressure sensor 1213 is disposed on the side frame of the terminal 1200, a gripping signal of the user on the terminal 1200 may be detected. The processor 1201 performs left-or-right hand recognition or a quick operation according to the gripping signal collected by the pressure sensor 1213. When the pressure sensor 1213 is disposed on a bottom layer of the touch screen 1205, the processor 1201 controls an operable widget on the UI according to a pressure operation performed by the user on the touch screen 1205. The operable widget includes at least one of: a button widget, a scroll bar widget, an icon widget, and a menu widget.

The fingerprint sensor 1214 is configured to collect a fingerprint of the user. The processor 1201 identifies an identity of the user according to the fingerprint collected by the fingerprint sensor 1214, or the fingerprint sensor 1214 identifies an identity of the user according to the collected fingerprint. When the identity of the user is identified as a trusted identity, the processor 1201 authorizes the user to perform a related sensitive operation. The sensitive operation includes unlocking a screen, viewing encrypted information, downloading software, payment, changing settings, or the like. The fingerprint sensor 1214 may be disposed on a front side, a back side, or a lateral side of the terminal 1200. In a case that a physical button or a vendor logo is disposed on the terminal 1200, the fingerprint 1214 may be integrated with the physical button or the vendor logo.

The optical sensor 1215 is configured to collect an intensity of ambient light. In an embodiment, the processor 1201 may control luminance of the touch screen 1205 according to the intensity of ambient light collected by the optical sensor 1215. In a specific embodiment, the luminance of the touch screen 1205 is increased in case of high intensity of the ambient light, and the luminance of the touch screen 1205 is reduced in case of low intensity of the ambient light. In another embodiment, the processor 1201 may further adjust a camera parameter of the camera component 1206 dynamically according to the intensity of ambient light collected by the optical sensor 1215.

The proximity sensor 1216, also called a distance sensor, is generally disposed on the front panel of the terminal 1200. The proximity sensor 1216 is configured to collect a distance between the user and a front surface of the terminal 1200. In an embodiment, when the proximity sensor 1216 detects that the distance between the user and the front surface of the terminal 1200 is decreasing, the processor 1201 controls the touch screen 1205 to switch from a screen-on state to a screen-off state. When the proximity sensor 1216 detects that the distance between the user and the front surface of the terminal 1200 is increasing, the processor 1201 controls the touch screen 1205 to switch from the screen-off state to the screen-on state.

A person skilled in the art may understand that the structure shown in Figure 12 constitutes no limitation on the terminal 1200, and the terminal may include more or fewer components than those shown in the figure, or some components may be combined, or a different component deployment may be used.

A computer-readable storage medium is further provided according to an embodiment of the present disclosure. The computer-readable storage medium stores computer-readable instructions. The computer-readable instructions, when executed by a processor, configure the processor to perform the steps in the foregoing method for denoising the video. The steps of the method for denoising the video here may be the steps in the above method embodiments.

Those skilled in the art may understand that all or some of procedures of the method in the foregoing embodiments may be implemented by a computer program instructing relevant hardware. The program may be stored in a non-volatile computer-readable storage medium. The procedures of the foregoing method embodiments may be implemented when the program is executed. All references to the memory, the storage, the database, or other medium used in embodiments of the present disclosure may include a non-volatile and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a RAM or an external cache. By way of description rather than limitation, the RAM may be implemented in various forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a rambus direct RAM (RDRAM), a direct rambus dynamic RAM (DRDRAM), and a rambus dynamic RAM (RDRAM).

Technical features of the foregoing embodiments may be arbitrarily combined. In order to make description concise, not all possible combinations of the technical features in the foregoing embodiments are described. The combinations of these technical features shall be considered as falling within the scope covered by this specification as long as there is no conflict.

The foregoing embodiments only show some implementations of the present disclosure, and are described in detail. These embodiments should not be construed as a limitation on the scope of the present disclosure. Several transformations and improvements can be made by those skilled in the art without departing from the concept of the present disclosure, and belong to the protection scope of the present disclosure. Therefore, the protection scope of the present disclosure shall be subject to the appended claims.

**Claims**

1. A processor implemented method for denoising a video, comprising:

   performing (401) spatial filtering on pixels of a target image in the video that is to be processed, to obtain a first image, wherein the spatial filtering is performed through a bilateral filter which is improved in that an inter-pixel dependency is not introduced to the target image, and the inter-pixel dependency refers to that neighbor pixels of a subsequently processed pixel comprise a pixel that is precedently processed when filtering the target image;
   performing (404) temporal filtering on the pixels of the target image according to a frame difference between the first image and a first denoised image to obtain a second image, wherein the pixels of the target image are processed in parallel in the temporal filtering, and the first denoised image is obtained by denoising an image corresponding to a frame that is immediately before a frame of the target image;

      wherein the temporal filtering is based on a Kalman filtering algorithm; and
      wherein performing (404) the temporal filtering comprises: predicting (405) first gain coefficients of the second denoised image based on second gain coefficients of the first denoised image, wherein the first gain coefficients each corresponds to one pixel location in the second image, and the second gain coefficients each corresponds to one pixel location in the first denoised image; and

fusing (406) the first image and the second image, or fusing another image and the second image, according to the first gain coefficients to obtain the second denoised image, wherein the another image is obtained by performing spatial filtering on the pixels of the target image through a filter of which a structure identical to a structure of the bilateral filter, and the second denoised image serves as a result of denoising the target image.

2. The method according to claim 1, wherein performing the spatial filtering on the pixels of the target image in the video that is to be processed comprises:

for each pixel location in the target image,
acquiring pixel values of neighbor pixel location, of said pixel location, which are before being processed in the spatial filtering; and
process said pixel location in the spatial filtering according to the pixel values of the neighbor pixel locations which are before being processed in the spatial filtering.

3. The method according to claim 1 or 2, wherein performing the spatial filtering on the pixels of the target image in the video that is to be processed comprises:

calling an image processing interface of a graphics processing unit;
acquiring the pixels of the target image in parallel, via the image processing interface; and
performing the spatial filtering via the image processing interface on the pixels acquired in parallel.

4. The method according to any one of claims 1 to 3, wherein performing the temporal filtering on the pixels of the target image according to the frame difference between the first image and the first denoised image comprises:

acquiring the pixels of the target image in parallel;
for each pixel location in the target image:

determining second variance of said pixel location according to corresponding first variance of said pixel location in the first denoised image, the frame difference between the first image and the first denoised image, and a variance offset coefficient;
determining a corresponding first gain coefficient at said pixel location according to the second variance, a corresponding first gain-offset coefficient, and a motion compensation coefficient, which are of said pixel location; and
determining a first pixel value at said pixel location, which is after being processed in the temporal filtering, according to the first gain coefficient, a pixel value at said pixel location in the target image, and a post-denoising pixel value at said pixel location in the first denoised image;

obtaining the second image according to the first pixel value at each pixel location which is after being processed in the temporal filtering.

5. The method according to claim 4, wherein before determining the corresponding first gain coefficient at said pixel location according to the second variance, the corresponding first gain-offset coefficient, and the motion compensation coefficient, which are of said pixel location, the method further comprises:
determining the motion compensation coefficient according to the frame difference.

6. The method according to claim 5, wherein before determining the corresponding first gain coefficient at said pixel location according to the second variance, the corresponding first gain-offset coefficient, and the motion compensation coefficient, which are of said pixel location,, the method further comprises:

acquiring a corresponding second gain coefficient and a corresponding second gain-offset coefficient at said pixel location in the first denoised image; and
determining the corresponding first gain-offset coefficient at said pixel location according to the second gain coefficient and the second gain-offset coefficient.

7. The method according to any one of claims 4 to 6, wherein fusing the first image and the second image according to the first gain coefficients comprises:

> for each pixel location in the second image,
> determining a product of a difference, between the corresponding first gain coefficient at said pixel location and a preset value, and the first pixel value at said pixel location to be a first fusion value;
> determining a product of corresponding first gain coefficient at said pixel location and a second pixel value at said pixel location to be a second fusion value, wherein the second pixel value is a pixel value at said pixel location in the first image; and
> summing the first fusion value and the second fusion value to obtain a pixel value at said pixel location which is after the denoising.

8. The method according to any one of claims 1 to 7, wherein both the spatial filtering and the temporal filtering process a brightness component at each pixel location.

9. An apparatus for denoising the video, the apparatus comprising:

> a spatial filtering module (1101), configured to perform spatial filtering on pixels of a target image in the video that is to be processed, to obtain a first image, wherein the spatial filtering is performed through a bilateral filter which is improved in that inter-pixel dependency is not introduced to the target image, and the inter-pixel dependency refers to that neighbor pixels of a subsequently processed pixel comprise a pixel that is precedently processed when filtering the target image;
> a temporal filtering module (1102), configured to perform temporal filtering on the pixels of the target image according to a frame difference between the first image and a first denoised image to obtain a second image, wherein the pixels of the target image are processed in parallel in the temporal filtering, and the first denoised image is obtained by denoising an image corresponding to a frame that is immediately before a frame of the target image;
> wherein the temporal filtering is based on a Kalman filtering algorithm; and
> wherein the temporal filtering module (1102) is configured to predict first gain coefficients of the second denoised image based on second gain coefficients of the first denoised image, wherein the first gain coefficients each corresponds to one pixel location in the second image, and the second gain coefficients each corresponds to one pixel location in the first denoised image; and
> a fusing module (1103), configured to:
> fuse the first image and the second image, or fusing another image and the second image, according to the first gain coefficients to obtain the second denoised image, wherein the another image is obtained by performing spatial filtering on the pixels of the target image through a filter of which a structure identical to a structure of the bilateral filter, the second denoised image serves as a result of denoising the target image.

10. The apparatus according to claim 9, wherein the spatial filtering module is further configured to, for each pixel location in the target image:

> acquire pixel values of neighbor pixel locations of said pixel location, which are before being processed in the spatial filtering; and
> process said pixel location in the spatial filtering according to the pixel values of the neighbor pixel locations which are before being processed in the spatial filtering.

11. The apparatus according to claim 10, wherein the apparatus further comprises:

> an interface calling module, configured to call an image processing interface of a graphics processing unit; and
> a parallel acquisition module, configured to:
>
> > acquire the pixels of the target image in parallel, via the image processing interface, and
> > perform the spatial filtering via the image processing interface on the pixels acquired in parallel.

12. The apparatus according to any one of claims 9 to 11, wherein the temporal filtering module is further configured to:

> acquire the pixels of the target image in parallel;
> for each pixel location in the target image,

determine second variance of said pixel location according to corresponding first variance of said pixel location in the first denoised image, the frame difference between the first image and the first denoised image, and a variance offset coefficient;

determine a corresponding first gain coefficient at said pixel location according to the second variance, a corresponding first gain-offset coefficient, and a motion compensation coefficient, which are of said pixel location; and

determine a first pixel value at said pixel location, which is after being processed in the temporal filtering, according to the first gain coefficient, a pixel value at said pixel location in the target image, and a post-denoising pixel value at said pixel location in the first denoised image; and

obtain the second image according to the first pixel value at each pixel location which is after being processed in the temporal filtering.

13. The apparatus according to any one of claims 9 to 12, wherein the temporal filtering module is further configured to, for each pixel location in the second image:

determine a product of a difference, between the corresponding first gain coefficient at said pixel location and a preset value, and the first pixel value at said pixel location to be a first fusion value;

determine a product of corresponding first gain coefficient at said pixel location and a second pixel value at said pixel location to be a second fusion value, wherein the second pixel value is a pixel value at said pixel location in the first image; and

sum the first fusion value and the second fusion value to obtain a pixel value at said pixel location which is after the denoising.

14. A non-volatile storage medium, storing computer-readable instructions, wherein:
the computer-readable instructions, when executed by one or more processors, configure the one or more processors to perform the method according to any one of claims 1 to 8.

**Patentansprüche**

1. Verfahren zum Entrauschen eines Videos, das von einem Prozessor implementiert wird und Folgendes umfasst:

Durchführen (401) einer räumlichen Filterung an Pixeln eines Zielbildes im Video, das zu verarbeiten ist, um ein erstes Bild zu erhalten, wobei die räumliche Filterung über ein bilaterales Filter durchgeführt wird, das insofern verbessert ist, als eine Abhängigkeit zwischen Pixeln nicht in das Zielbild übernommen wird, und sich die Abhängigkeit zwischen Pixeln darauf bezieht, dass Nachbarpixel eines nachfolgend verarbeiteten Pixels ein Pixel umfassen, das zuvor beim Filtern des Zielbildes verarbeitet wurde;

Durchführen (404) einer zeitlichen Filterung an den Pixeln des Zielbildes gemäß einer Framedifferenz zwischen dem ersten Bild und einem ersten entrauschten Bild, um ein zweites Bild zu erhalten, wobei die Pixel des Zielbildes bei der zeitlichen Filterung parallel verarbeitet werden und das erste entrauschte Bild durch Entrauschen eines Bildes erhalten wird, das einem Frame entspricht, der sich unmittelbar vor einem Frame des Zielbildes befindet;

wobei die zeitliche Filterung auf einem Kalman-Filteralgorithmus basiert; und

wobei das Durchführen (404) der zeitlichen Filterung Folgendes umfasst: Vorhersagen (405) von ersten Verstärkungskoeffizienten des zweiten entrauschten Bildes auf Basis von zweiten Verstärkungskoeffizienten des ersten entrauschten Bildes, wobei die ersten Verstärkungskoeffizienten jeweils einem Pixelort im zweiten Bild entsprechen und die zweiten Verstärkungskoeffizienten jeweils einem Pixelort im ersten entrauschten Bild entsprechen; und

Verschmelzen (406) des ersten Bildes und des zweiten Bildes oder Verschmelzen eines anderen Bildes und des zweiten Bildes gemäß den ersten Verstärkungskoeffizienten, um das zweite entrauschte Bild zu erhalten, wobei das andere Bild durch Durchführen einer räumlichen Filterung an den Pixeln des Zielbildes über ein Filter erhalten wird, dessen Struktur mit einer Struktur des bilateralen Filters identisch ist, und das zweite entrauschte Bild als ein Ergebnis des Entrauschens des Zielbildes dient.

2. Verfahren nach Anspruch 1, wobei das Durchführen der räumlichen Filterung an den Pixeln des Zielbildes im Video, das zu verarbeiten ist, Folgendes umfasst:

für jeden Pixelort im Zielbild,

Erfassen von Pixelwerten eines benachbarten Pixelorts des Pixelorts, deren Verarbeitung durch die räumliche Filterung bevorsteht; und

Verarbeiten des Pixelorts bei der räumlichen Filterung gemäß den Pixelwerten der benachbarten Pixelorte, deren Verarbeitung durch die räumliche Filterung bevorsteht.

3. Verfahren nach Anspruch 1 oder 2, wobei das Durchführen der räumlichen Filterung an den Pixeln des Zielbildes im Video, das zu verarbeiten ist, Folgendes umfasst:

Aufrufen einer Bildverarbeitungsschnittstelle einer Grafikverarbeitungseinheit;

paralleles Erfassen der Pixel des Zielbildes via die Bildverarbeitungsschnittstelle; und

paralleles Durchführen der räumlichen Filterung via die Bildverarbeitungsschnittstelle an den erfassten Pixeln.

4. Verfahren nach einem der Ansprüche 1 bis 3, wobei das Durchführen der zeitlichen Filterung an den Pixeln des Zielbildes gemäß der Framedifferenz zwischen dem ersten Bild und dem ersten entrauschten Bild Folgendes umfasst:

paralleles Erfassen der Pixel des Zielbildes;

für jeden Pixelort im Zielbild:

Bestimmen einer zweiten Varianz des Pixelorts gemäß einer entsprechenden ersten Varianz des Pixelorts im ersten entrauschten Bild, der Framedifferenz zwischen dem ersten Bild und dem ersten entrauschten Bild und einem Varianzversatzkoeffizienten;

Bestimmen eines entsprechenden ersten Verstärkungskoeffizienten am Pixelort gemäß der zweiten Varianz, einem entsprechenden ersten Verstärkungsversatzkoeffizienten und einem Bewegungskompensationskoeffizienten, die sich auf den Pixelort beziehen; und

Bestimmen eines ersten Pixelwerts am Pixelort, der bereits durch die zeitliche Filterung verarbeitet wurde, gemäß dem ersten Verstärkungskoeffizienten, einem Pixelwert am Pixelort des Zielbildes und einem Pixelwert nach dem Entrauschen am Pixelort im ersten entrauschten Bild;

Erhalten des zweiten Bildes gemäß dem ersten Pixelwert an jedem Pixelort, der bereits durch die zeitliche Filterung verarbeitet wurde.

5. Verfahren nach Anspruch 4, wobei das Verfahren vor dem Bestimmen des entsprechenden ersten Verstärkungskoeffizienten am Pixelort gemäß der zweiten Varianz, dem entsprechenden ersten Verstärkungsversatzkoeffizienten und dem Bewegungskompensationskoeffizienten, die sich auf den Pixelort beziehen, ferner Folgendes umfasst: Bestimmen des Bewegungskompensationskoeffizienten gemäß der Framedifferenz.

6. Verfahren nach Anspruch 5, wobei das Verfahren vor dem Bestimmen des entsprechenden ersten Verstärkungskoeffizienten am Pixelort gemäß der zweiten Varianz, dem entsprechenden ersten Verstärkungsversatzkoeffizienten und dem Bewegungskompensationskoeffizienten, die sich auf den Pixelort beziehen, ferner Folgendes umfasst:

Erfassen eines entsprechenden zweiten Verstärkungskoeffizienten und eines entsprechenden zweiten Verstärkungsversatzkoeffizienten am Pixelort im ersten entrauschten Bild; und

Bestimmen des entsprechenden ersten Verstärkungsversatzkoeffizienten am Pixelort gemäß dem zweiten Verstärkungskoeffizienten und dem zweiten Verstärkungsversatzkoeffizienten.

7. Verfahren nach einem der Ansprüche 4 bis 6, wobei das Verschmelzen des ersten Bildes und des zweiten Bildes gemäß dem ersten Verstärkungskoeffizienten Folgendes umfasst:

für jeden Pixelort im zweiten Bild,

Bestimmen eines Produkts einer Differenz zwischen dem entsprechenden ersten Verstärkungskoeffizienten am Pixelort und einem voreingestellten Wert und dem ersten Pixelwert am Pixelort als einen ersten Verschmelzungswert;

Bestimmen eines Produkts eines entsprechenden ersten Verstärkungskoeffizienten am Pixelort und einem zweiten Pixelwert am Pixelort als einen zweiten Verschmelzungswert, wobei der zweite Pixelwert ein Pixelwert am Pixelort des ersten Bildes ist; und

Summieren des ersten Verschmelzungswerts und des zweiten Verschmelzungswerts, um einen Pixelwert am Pixelort zu erhalten, der bereits entrauscht wurde.

**8.** Verfahren nach einem der Ansprüche 1 bis 7, wobei sowohl die räumliche Filterung als auch die zeitliche Filterung eine Helligkeitskomponente an jedem Pixelort verarbeiten.

**9.** Einrichtung zum Entrauschen des Videos, wobei die Einrichtung Folgendes umfasst:

ein räumliches Filtermodul (1101), das dazu ausgelegt ist, eine räumliche Filterung an Pixeln eines Zielbildes im Video, das zu verarbeiten ist, durchzuführen, um ein erstes Bild zu erhalten, wobei die räumliche Filterung über ein bilaterales Filter durchgeführt wird, das insofern verbessert ist, als eine Abhängigkeit zwischen Pixeln nicht in das Zielbild übernommen wird, und sich die Abhängigkeit zwischen Pixeln darauf bezieht, dass Nachbarpixel eines nachfolgend verarbeiteten Pixels ein Pixel umfassen, das zuvor beim Filtern des Zielbildes verarbeitet wurde;

ein zeitliches Filtermodul (1102), das dazu ausgelegt ist, eine zeitliche Filterung an den Pixeln des Zielbildes gemäß einer Framedifferenz zwischen dem ersten Bild und einem ersten entrauschten Bild durchzuführen, um ein zweites Bild zu erhalten, wobei die Pixel des Zielbildes bei der zeitlichen Filterung parallel verarbeitet werden und das erste entrauschte Bild durch Entrauschen eines Bildes erhalten wird, das einem Frame entspricht, der sich unmittelbar vor einem Frame des Zielbildes befindet;

wobei die zeitliche Filterung auf einem Kalman-Filteralgorithmus basiert; und

wobei das räumliche Filtermodul (1102) dazu ausgelegt ist, erste Verstärkungskoeffizienten des zweiten entrauschten Bildes auf Basis von zweiten Verstärkungskoeffizienten des ersten entrauschten Bildes vorherzusagen, wobei die ersten Verstärkungskoeffizienten jeweils einem Pixelort im zweiten Bild entsprechen und die zweiten Verstärkungskoeffizienten jeweils einem Pixelort im ersten entrauschten Bild entsprechen; und

ein Verschmelzungsmodul (1103), das zu Folgendem ausgelegt ist:

Verschmelzen des ersten Bildes und des zweiten Bildes oder Verschmelzen eines anderen Bildes und des zweiten Bildes gemäß den ersten Verstärkungskoeffizienten, um das zweite entrauschte Bild zu erhalten, wobei das andere Bild durch Durchführen einer räumlichen Filterung an den Pixeln des Zielbildes über ein Filter erhalten wird, dessen Struktur mit einer Struktur des bilateralen Filters identisch ist, das zweite entrauschte Bild als ein Ergebnis des Entrauschens des Zielbildes dient.

**10.** Einrichtung nach Anspruch 9, wobei das räumliche Filtermodul für jeden Pixelort im Zielbild ferner zu Folgendem ausgelegt ist:

Erfassen von Pixelwerten von benachbarten Pixelorten des Pixelorts, deren Verarbeitung durch die räumliche Filterung bevorsteht; und

Verarbeiten des Pixelorts bei der räumlichen Filterung gemäß den Pixelwerten der benachbarten Pixelorte, deren Verarbeitung durch die räumliche Filterung bevorsteht.

**11.** Einrichtung nach Anspruch 10, wobei die Einrichtung ferner Folgendes umfasst:

ein Schnittstellenaufrufmodul, das dazu ausgelegt ist, eine Bildverarbeitungsschnittstelle einer Grafikverarbeitungseinheit aufzurufen; und

ein paralleles Erfassungsmodul, das zu Folgendem ausgelegt ist:

paralleles Erfassen der Pixel des Zielbildes via die Bildverarbeitungsschnittstelle, und

paralleles Durchführen der räumlichen Filterung via die Bildverarbeitungsschnittstelle an den erfassten Pixeln.

**12.** Einrichtung nach einem der Ansprüche 9 bis 11, wobei das zeitliche Filtermodul ferner zu Folgendem ausgelegt ist:

paralleles Erfassen der Pixel des Zielbildes;

für jeden Pixelort im Zielbild,

Bestimmen einer zweiten Varianz des Pixelorts gemäß einer entsprechenden ersten Varianz des Pixelorts im ersten entrauschten Bild, der Framedifferenz zwischen dem ersten Bild und dem ersten entrauschten Bild und einem Varianzversatzkoeffizienten;

Bestimmen eines entsprechenden ersten Verstärkungskoeffizienten am Pixelort gemäß der zweiten Varianz, einem entsprechenden ersten Verstärkungsversatzkoeffizienten und einem Bewegungskompensationskoeffizienten, die sich auf den Pixelort beziehen; und

Bestimmen eines ersten Pixelwerts am Pixelort, der bereits durch die zeitliche Filterung verarbeitet wurde, gemäß dem ersten Verstärkungskoeffizienten, einem Pixelwert am Pixelort des Zielbildes und einem Pixelwert nach dem Entrauschen am Pixelort im ersten entrauschten Bild; und

Erhalten des zweiten Bildes gemäß dem ersten Pixelwert an jedem Pixelort, der bereits durch die zeitliche Filterung verarbeitet wurde.

**13.** Einrichtung nach einem der Ansprüche 9 bis 12, wobei das zeitliche Filtermodul für jeden Pixelort im zweiten Bild ferner zu Folgendem ausgelegt ist:

Bestimmen eines Produkts einer Differenz zwischen dem entsprechenden ersten Verstärkungskoeffizienten am Pixelort und einem voreingestellten Wert und dem ersten Pixelwert am Pixelort als einen ersten Verschmelzungswert;

Bestimmen eines Produkts eines entsprechenden ersten Verstärkungskoeffizienten am Pixelort und einem zweiten Pixelwert am Pixelort als einen zweiten Verschmelzungswert, wobei der zweite Pixelwert ein Pixelwert am Pixelort des ersten Bildes ist; und

Summieren des ersten Verschmelzungswerts und des zweiten Verschmelzungswerts, um einen Pixelwert am Pixelort zu erhalten, der bereits entrauscht wurde.

**14.** Nichtflüchtiges Speichermedium, auf dem computerlesbare Anweisungen gespeichert sind, wobei:

die computerlesbaren Anweisungen, die, wenn sie von einem oder mehreren Prozessoren ausgeführt werden, den einen oder die mehreren Prozessoren dazu auslegen, das Verfahren nach einem der Ansprüche 1 bis 8 durchzuführen.


**Revendications**

**1.** Procédé mis en œuvre par un processeur pour débruiter une vidéo, comprenant les étapes suivantes :

effectuer (401) un filtrage spatial sur des pixels d'une image cible dans la vidéo qui doit être traitée pour obtenir une première image, dans lequel le filtrage spatial est effectué par un filtre bilatéral qui est amélioré en ce qu'une dépendance inter-pixel n'est pas introduite dans l'image cible, et la dépendance inter-pixel se réfère au fait que les pixels voisins d'un pixel traité ultérieurement comprennent un pixel qui est traité précédemment lors du filtrage de l'image cible ;

effectuer (404) un filtrage temporel sur les pixels de l'image cible selon une différence de trame entre la première image et une première image débruitée pour obtenir une deuxième image, dans lequel les pixels de l'image cible sont traités en parallèle dans le filtrage temporel, et la première image débruitée est obtenue en débruitant une image correspondant à une trame qui précède immédiatement une trame de l'image cible ;

dans lequel le filtrage temporel est basé sur un algorithme de filtrage de Kalman ; et

dans lequel le fait d'effectuer (404) le filtrage temporel comprend : le fait prédire (405) des premiers coefficients de gain de la deuxième image débruitée sur la base de deuxièmes coefficients de gain de la première image débruitée, dans lequel les premiers coefficients de gain correspondent chacun à un emplacement de pixel dans la deuxième image, et les deuxièmes coefficients de gain correspondent chacun à un emplacement de pixel dans la première image débruitée ; et

fusionner (406) la première image et la deuxième image, ou fusionner une autre image et la deuxième image, selon les premiers coefficients de gain pour obtenir la deuxième image débruitée, dans lequel cette autre image est obtenue en effectuant un filtrage spatial sur les pixels de l'image cible par l'intermédiaire d'un filtre dont une structure est identique à une structure du filtre bilatéral, et la deuxième image débruitée sers de résultat de débruitage l'image cible.

**2.** Procédé de la revendication 1, dans lequel le fait d'effectuer le filtrage spatial sur les pixels de l'image cible dans la vidéo qui doit être traitée comprend les étapes suivantes :

pour chaque emplacement de pixel dans l'image cible,

acquérir des valeurs de pixel d'un emplacement de pixel voisin dudit emplacement de pixel qui précèdent le traitement dans le filtrage spatial ; et

traiter ledit emplacement de pixel dans le filtrage spatial selon les valeurs de pixel des emplacements de pixels voisins qui précèdent le traitement dans le filtrage spatial.

**3.** Procédé de la revendication 1 ou 2, dans lequel le fait d'effectuer le filtrage spatial sur les pixels de l'image cible dans la vidéo qui doit être traitée comprend les étapes suivantes :

appeler une interface de traitement d'image d'une unité de traitement graphique ;
acquérir les pixels de l'image cible en parallèle via l'interface de traitement d'image ; et
effectuer le filtrage spatial via l'interface de traitement d'image sur les pixels acquis en parallèle.

**4.** Procédé selon l'une des revendications 1 à 3, dans lequel le fait d'effectuer le filtrage temporel sur les pixels de l'image cible selon la différence de trame entre la première image et la première image débruitée comprend les étapes suivantes :

acquérir les pixels de l'image cible en parallèle ;
pour chaque emplacement de pixel dans l'image cible :

déterminer une deuxième variance dudit emplacement de pixel selon une première variance correspondante dudit emplacement de pixel dans la première image débruitée, la différence de trame entre la première image et la première image débruitée et un coefficient de décalage de variance ;
déterminer un premier coefficient de gain correspondant audit emplacement de pixel selon la deuxième variance, un premier coefficient de décalage de gain correspondant et un coefficient de compensation de mouvement qui se rapportent audit emplacement de pixel ; et
déterminer une première valeur de pixel audit emplacement de pixel qui est ultérieure au traitement dans le filtrage temporel, selon le premier coefficient de gain, une valeur de pixel audit emplacement de pixel dans l'image cible et une valeur de pixel post-débruitage audit emplacement de pixel dans la première image débruitée ;
obtenir la deuxième image selon la première valeur de pixel à chaque emplacement de pixel qui est ultérieure au traitement dans le filtrage temporel.

**5.** Procédé de la revendication 4, dans lequel, avant de déterminer le premier coefficient de gain correspondant audit emplacement de pixel selon la deuxième variance, le premier coefficient de décalage de gain correspondant et le coefficient de compensation de mouvement qui se rapportent audit emplacement de pixel, le procédé comprend en outre l'étape suivante :
déterminer le coefficient de compensation de mouvement selon la différence de trame.

**6.** Procédé de la revendication 5, dans lequel, avant de déterminer le premier coefficient de gain correspondant audit emplacement de pixel selon la deuxième variance, le premier coefficient de décalage de gain correspondant et le coefficient de compensation de mouvement qui se rapportent audit emplacement de pixel, le procédé comprend en outre les étapes suivantes :

acquérir un deuxième coefficient de gain correspondant et un deuxième coefficient de décalage de gain correspondant audit emplacement de pixel dans la première image débruitée ; et
déterminer le premier coefficient de décalage de gain correspondant audit emplacement de pixel selon le deuxième coefficient de gain et le deuxième coefficient de décalage de gain.

**7.** Procédé selon l'une des revendications 4 à 6, dans lequel le fait de fusionner la première image et la deuxième image selon les premiers coefficients de gain comprend les étapes suivantes :

pour chaque emplacement de pixel dans la deuxième image,
déterminer un produit d'une différence entre le premier coefficient de gain correspondant audit emplacement de pixel et une valeur prédéfinie et de la première valeur de pixel audit emplacement de pixel comme étant une première valeur de fusion ;
déterminer un produit d'un premier coefficient de gain correspondant audit emplacement de pixel et d'une deuxième valeur de pixel audit emplacement de pixel comme étant une deuxième valeur de fusion, dans lequel la deuxième valeur de pixel est une valeur de pixel audit emplacement de pixel dans la première image ; et
additionner la première valeur de fusion et la deuxième valeur de fusion pour obtenir une valeur de pixel audit emplacement de pixel qui est ultérieure au débruitage.

**8.** Procédé selon l'une des revendications 1 à 7, dans lequel le filtrage spatial et le filtrage temporel traitent tous deux une composante de luminosité à chaque emplacement de pixel.

**9.** Appareil pour débruiter la vidéo, l'appareil comprenant :

un module de filtrage spatial (1101) configuré pour effectuer un filtrage spatial sur des pixels d'une image cible dans la vidéo qui doit être traitée pour obtenir une première image, dans lequel le filtrage spatial est effectué par un filtre bilatéral qui est amélioré en ce qu'une dépendance inter-pixel n'est pas introduite dans l'image cible, et la dépendance inter-pixel se réfère au fait que les pixels voisins d'un pixel traité ultérieurement comprennent un pixel qui est traité précédemment lors du filtrage de l'image cible ;

un module de filtrage temporel (1102) configuré pour effectuer un filtrage temporel sur les pixels de l'image cible selon une différence de trame entre la première image et une première image débruitée pour obtenir une deuxième image, dans lequel les pixels de l'image cible sont traités en parallèle dans le filtrage temporel, et la première image débruitée est obtenue en débruitant une image correspondant à une trame qui précède immédiatement une trame de l'image cible ;

dans lequel le filtrage temporel est basé sur un algorithme de filtrage de Kalman ; et

dans lequel le module de filtrage temporel (1102) est configuré pour prédire des premiers coefficients de gain de la deuxième image débruitée sur la base de deuxièmes coefficients de gain de la première image débruitée, dans lequel les premiers coefficients de gain correspondent chacun à un emplacement de pixel dans la deuxième image, et les deuxièmes coefficients de gain correspondent chacun à un emplacement de pixel dans la première image débruitée ; et

un module de fusion (1103), configuré pour :

fusionner la première image et la deuxième image, ou fusionner une autre image et la deuxième image, selon les premiers coefficients de gain pour obtenir la deuxième image débruitée, dans lequel cette autre image est obtenue en effectuant un filtrage spatial sur les pixels de l'image cible par l'intermédiaire d'un filtre dont une structure est identique à une structure du filtre bilatéral, la deuxième image débruitée sers de résultat de débruitage l'image cible.

10. Appareil de la revendication 9, dans lequel le module de filtrage spatial est en outre configuré pour, pour chaque emplacement de pixel dans l'image cible :

acquérir des valeurs de pixel d'emplacements de pixels voisins dudit emplacement de pixel, qui précèdent le traitement dans le filtrage spatial ; et

traiter ledit emplacement de pixel dans le filtrage spatial selon les valeurs de pixel des emplacements de pixels voisins qui précèdent le traitement dans le filtrage spatial.

11. Appareil de la revendication 10, dans lequel l'appareil comprend en outre :

un module d'appel d'interface configuré pour appeler une interface de traitement d'image d'une unité de traitement graphique ; et

un module d'acquisition parallèle, configuré pour :

acquérir les pixels de l'image cible en parallèle via l'interface de traitement d'image, et

effectuer le filtrage spatial via l'interface de traitement d'image sur les pixels acquis en parallèle.

12. Appareil selon l'une des revendications 9 à 11, dans lequel le module de filtrage temporel est en outre configuré pour :

acquérir les pixels de l'image cible en parallèle ;

pour chaque emplacement de pixel dans l'image cible,

déterminer une deuxième variance dudit emplacement de pixel selon une première variance correspondante dudit emplacement de pixel dans la première image débruitée, la différence de trame entre la première image et la première image débruitée et un coefficient de décalage de variance ;

déterminer un premier coefficient de gain correspondant audit emplacement de pixel selon la deuxième variance, un premier coefficient de décalage de gain correspondant et un coefficient de compensation de mouvement qui se rapportent audit emplacement de pixel ; et

déterminer une première valeur de pixel audit emplacement de pixel qui est ultérieure au traitement dans le filtrage temporel, selon le premier coefficient de gain, une valeur de pixel audit emplacement de pixel dans l'image cible et une valeur de pixel post-débruitage audit emplacement de pixel dans la première image débruitée ; et

obtenir la deuxième image selon la première valeur de pixel à chaque emplacement de pixel qui est ultérieure au traitement dans le filtrage temporel.

13. Appareil selon l'une des revendications 9 à 12, dans lequel le module de filtrage temporel est en outre configuré pour, pour chaque emplacement de pixel dans la deuxième image :

déterminer un produit d'une différence entre le premier coefficient de gain correspondant audit emplacement de pixel et une valeur prédéfinie et de la première valeur de pixel audit emplacement de pixel comme étant une première valeur de fusion ;

déterminer un produit d'un premier coefficient de gain correspondant audit emplacement de pixel et d'une deuxième valeur de pixel audit emplacement de pixel comme étant une deuxième valeur de fusion, dans lequel la deuxième valeur de pixel est une valeur de pixel audit emplacement de pixel dans la première image ; et additionner la première valeur de fusion et la deuxième valeur de fusion pour obtenir une valeur de pixel audit emplacement de pixel qui est ultérieure au débruitage.

**14.** Support de stockage non volatile stockant des instructions lisibles par ordinateur, dans lequel :

les instructions lisibles par ordinateur, lorsqu'elles sont exécutées par un ou plusieurs processeurs, configurent les un ou plusieurs processeurs pour effectuer le procédé selon l'une des revendications 1 à 8.

Figure 1

Figure 2

Figure 3

~ 401

A terminal performs spatial filtering on pixels of a target image in the video that is to be processed, to obtain a first image, wherein the spatial filtering is configured such that an inter-pixel dependency is not introduced to the target image

~ 402

The terminal acquires a first denoised image, where the first denoised image is obtained by denoising an image in an immediate previous frame of the target image

~ 403

The terminal determines a frame difference between the first image and the first denoised image

~ 404

The terminal performs temporal filtering on the pixels of the target image according to the frame difference between the first image and the first denoised image, to obtain a second image, where the pixels of the target image are processed in parallel in the temporal filtering

~ 405

The terminal predicts first gain coefficients of a second denoised image based on second gain coefficients of the first denoised image, where the first coefficients each corresponds to one pixel in the second image, and the second gain coefficients each corresponds to one pixel in the target image

~ 406

The terminal fuses the first image and the second image according to the first gain coefficients, to obtain the second denoised image which serves as the target image that is denoised

Figure 4

Scan from left to right

Scan from top to bottom

□ Neighborhood pixel    ◎ Central pixel    ☑ Processed pixel    ☒ Unprocessed pixel

Figure 5

Scan from left to right

Scan from top to bottom

☐ Neighborhood pixel   ☉ Central pixel   ☒ Unprocessed pixel

Figure 6

Target image

Image filtered by a
bilateral filter

Image filtered by a
first filter

Figure 7

Target image before denoising        Target image after denoising

Figure 8

Figure 9

Figure 10

Spatial filtering module — 1101

Temporal filtering module — 1102

Fusing module — 1103

Figure 11

1200

Processor 1201

Memory 1202

Peripheral interface 1203

Radio frequency circuit — 1204

Display screen — 1205

Camera assembly — 1206

Audio circuit — 1207

Positioning component — 1208

Power source — 1209

| Acceleration sensor 1211 | Gyroscope sensor 1212 | Pressure sensor 1213 |
| Fingerprint sensor 1214 | Optical sensor 1215 | Proximity detector 1216 |

Sensor 1210

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911288617

**Non-patent literature cited in the description**

- Video Denoising Based on a Spatiotemporal Kalman Bilateral Mixture Model. *Scientific World Journal*, vol. 2013, 10
- Real-time video denoising on multicores and GPUs with Kalman-based and Bilateral filters fusion. *J Real-Time Image Proc*, 2019, vol. 16, 1629-1642